Europäisches Patentamt

(19) European Patent Office

Office européen des brevets

(11) Publication number: **0 163 666**
**B1**

# (12) EUROPEAN PATENT SPECIFICATION

(45) Date of publication of patent specification: **04.05.88**

(51) Int. Cl.⁴: **C 22 B 7/00**

(21) Application number: **84904075.3**

(22) Date of filing: **16.11.84**

(86) International application number:
**PCT/AU84/00235**

(87) International publication number:
**WO 85/02204 23.05.85 Gazette 85/12**

(54) **TREATMENT OF DROSS.**

(30) Priority: **18.11.83 AU 2452/83**

(43) Date of publication of application:
**11.12.85 Bulletin 85/50**

(45) Publication of the grant of the patent:
**04.05.88 Bulletin 88/18**

(84) Designated Contracting States:
**GB**

(56) References cited:
**AU-B- 619 727**
**AU-B-1 422 444**
**AU-B-2 472 277**
**FR-A-1 040 954**
**US-A-1 642 358**
**US-A-2 343 760**
**US-A-2 381 970**
**US-A-3 666 441**
**US-A-4 033 761**
**US-A-4 162 915**
**US-A-4 168 155**

(73) Proprietor: **MOUNT ISA MINES LIMITED**
**160 Ann Street**
**Brisbane, QLD 4000 (AU)**

(73) Proprietor: **COMMONWEALTH SCIENTIFIC AND**
**INDUSTRIAL RESEARCH ORGANIZATION**
**Limestone Avenue**
**Campbell Australian Capital Territory 2601 (AU)**

(72) Inventor: **HOLLIS, Richard, Graham**
**1 Steelcon Parade**
**Mount Isa, QLD 4825 (AU)**

(74) Representative: **Newstead, Michael John et al**
**Page & Co. Temple Gate House Temple Gate**
**Bristol BS1 6PL (GB)**

Courier Press, Leamington Spa, England.

**Description**

Technical field

This invention relates to a method for treatment of lead drosses, and more particularly to a pyrometallurgical method for removing lead constituents from the copper constituents of the dross.

The invention is herein described by way of example only with reference to dross obtained in the smelting of sintered lead concentrates but is not limited to drosses obtained from that process.

Background art

In the extraction of lead from lead ores by the sinter process, lead sinter is smelted in a blast furnace to produce bullion and slag which are separated externally to the blast furnace in a forehearth. Lead bullion from the forehearth is collected in cooling pots and then transferred to drossing kettles. Copper compounds with other impurities rejected from solution during cooling float to the surface in the drossing kettle. Coke, sawdust, and the like may be added to aid the formation of a dry powdery dross which is skimmed from the surface of the cooling lead. Sulphur may be added to remove final traces of copper from bullion.

Constituents of the skimmed off lead dross include about 20% by weight of lead sulphide, about 20% by weight of copper sulphide predominantly as chalcocite, and about 50% by weight of entrained metallic lead metal. Minor amounts of antimony, arsenic and other impurities are also present. Typical assays of various types of dross are shown in Table I. It can be seen that it is not unusual for a dross of the type under discussion to have a lead assay of the order of 70% and a copper assay of from about 5% to about 35%.

Various methods have been proposed with the objective of recovering lead from dross. These include pyrometallurgical methods and hydroextractive methods. Of the pyrometallurgical methods U.S. Patents 2,217,981 and U.S. 4,033,761 each describe processes in which lead bullion entrained in the dross is released but neither process enables recovery of bound lead present in the dross as lead sulphide, nor does either permit the copper to be recovered readily by virtue that the copper matte retains a high residual lead assay.

U.S. Patent 4,333,763 provides a process which enables the copper constituents to be recovered with a sufficiently low lead content to be suitable for shipment to a copper refinery. In that process a pool of molten lead metal is first established and then metallic alkali metal, for example sodium metal, is incorporated in the lead pool. The lead sulphide bearing dross is added to the molten lead and alkali metal with stirring at a temperature not above 650°C. The alkali metal reacts with the lead sulphide to reduce the combined lead to metallic lead and subsequently a matte phase comprising sulphur compounds of the alkali metal together with copper is separated from the molten lead. The alkali metal sulphides may be leached from the matte phase. As the process permits the handling of recovered copper matte in a conventional copper refining process, the process has considerable economic advantages in comparison with earlier processes. However the requirement for metallic sodium renders the process expensive to conduct, especially at locations remote from sodium manufacture.

An object of the present invention was the development of a pyrometallurgical process which avoids the disadvantages of the process described in U.S. Patent 4,333,763 and which in preferred embodiments would enable the copper constituents to be recovered sufficiently free from lead constituents to be able to be processed in a copper smelter with little or negligible increase in contamination.

Disclosure of the invention

According to one aspect of the invention consists in a pyrometallurgical method for removing lead constituents from copper constituents of a dross comprising the steps of:

1. melting the dross at a temperature in excess of 900°C;
2. allowing the molten dross to separate into a layer of lead bullion and a layer of matte;
3. removing the lead bullion layer from the matte layer;
4. heating the matte layer to a tempeature in excess of 1000°C and removing at least a major portion of the lead sulphide therefrom as a fume whereby to produce a copper matte low in lead assay; and
5. recovering the lead as fume.

Preferred embodiments

Preferred embodiment of the invention will now be described by way of example only. Batches of dross having the composition shown in Table II were melted by addition to a slag contained in a vertical furnace heated by means of a submerged combustion lance at a temperature of from 950°C to 1200°C. In each case a pool of molten lead formed as a layer which could be tapped off leaving a remaining molten matte layer comprising lead sulphide and copper sulphide. The composition of matte and metal is shown in Table III. The higher the temperature the more lead sulphide is eliminated and the greater the concentration of copper in matte.

The separated matte, substantially free of entrained bullion, but rich in lead sulphide was fed at 120 kg. per hour into a 250 kg. upright reactor heated by means of a submerged combustion SIROSMELT lance fed with an excess of oil to air (95% stoichiometry). Lead sulphide was removed by fuming, the lance combustion gases assisting removal of fume, and the fume was recovered in a bag house filter.

The residual copper matte had a composition comprising 80.3% copper, 17.1% sulphur and assayed 1.95% lead. The method thus produced a copper product with a lead to copper ratio which is acceptable for copper processing. After allowing for the cost of oil, operating costs were found to be much lower than the costs of operating a process in which sodium metal is consumed and other disadvantages of the sodium process are avoided.

The melting step may be performed at a temperature above about 900°C although a temperature of 1000—1200°C is preferred. It is not essential that the liquid lead layer be separated from the matte and slag layers while both are molten. For example the melt could be cast and allowed to separate while cooling. The solidified layers may then be physically separated and the separated matte layer may be remelted for the fuming step. However it is economically preferable to tap-off the lead layer and to proceed directly from the liquation and separation to the fuming step.

Use of the SIROSMELT lance greatly assists the fuming step. A slag is used to protect the lance during the fuming for example a copper reverberatory furnace slag containing about 10% additional lime or a high lead oxide slag.

As will be apparent to those skilled in the art from the teaching hereof the process conditions may be varied to an extent without departing from the inventive concept hereof and such variations are deemed to be within the scope of this disclosure.

TABLE I

Typical dross assays

| | Pb% | Cu% | As% | Ag g/t | S% |
|---|---|---|---|---|---|
| 1. Unrecycled coke dross fines (skimmed) | 65—75 | 8—11 | 0.6—0.8 | — | 6—9 |
| 2. Coke dross lumps (skimmed) | 40—65 | 17—35 | — | — | 10—11 |
| 3. Recycled coke dross fines (on kettle) | 50—65 | 20—35 | 1 | 1200 | |
| 4. Recycled coke dross (skimmed) | 65—70 | 11—15 | 0.4—0.8 | 2100 | |
| 5. Sulphur dross | 83—85 | 5—7 | — | — | 6—7 |

TABLE II
Composition of dross samples

| Assay % Net | | Mineralogical compositions | |
|---|---|---|---|
| Pb | 68.0 | PbS | 23.6% |
| Cu | 14.3 | Cu$_2$S | 15.7% |
| S | 6.46 | Cu$_3$As | 2.44% |
| As | 0.69 | Pb Metal | 47.6% |

# 0 163 666

TABLE III

% Weight composition of molten dross

|  |  | Cu | Pb | S |
|---|---|---|---|---|
| 950°C | Matte Layer | 29.5 | 54.2 | 14.5 |
|  | Metal Layer | 1.25 |  |  |
| 1020°C | Matte Layer | 35.6 | 49.5 | 15.0 |
|  | Metal Layer | 1.6 |  |  |
| 1200°C | Matte Layer | 55.6 | 26.6 | 17.5 |
|  | Metal Layer | 2.0 |  |  |

## Claims

1. A pyrometallurgical method for removing lead constituents from copper constituents of a dross comprising the steps of:

(a) melting the dross at a temperature in excess of 900°C;

(b) allowing the molten dross to separate into a layer of lead bullion and a layer of matte;

(c) removing the lead bullion layer from the matte layer;

(d) heating the matte layer after removal of the lead bullion layer to a temperature in excess of 1000°C and removing at least a major portion of the lead sulphide therefrom as a fume whereby to produce a copper matte low in lead assay; and

(e) recovering the lead as fume.

2. A method according to claim 1 wherein the step of melting is conducted at a temperature of between 1000°C and 1200°C.

3. A method according to claim 1 or claim 2 wherein the step of melting is conducted by means of a submerged combustion lance.

4. A method according to claim 1 or claim 2 wherein the step of removing the lead bullion layer from the matte is conducted while the lead bullion layer is liquid.

5. A method according to claim 1 wherein the step of heating the matte layer after removal of lead bullion is conducted by means of a submerged combustion lance.

6. A method according to claim 5 wherein the submerged combustion lance is fed with an excess of fuel to air.

7. A method according to claim 6 wherein the lance is protected by a slag during said step of heating at a temperature in excess of 1000°C.

8. A method according to claim 7 wherein the slag is a copper reverberatory slag containing additional lime.

9. A method according to claim 8 wherein the slag is a high lead oxide slag.

## Patentansprüche

1. Pyrometallurgisches Verfahren zum Entfernen der Bleianteile von den Kupferkomponenten einer Schlacke, bestehend aus folgenden Schritten:

a) Schmeizen der Schlacke bei einer Temperatur von über 900°C;

b) Trennen der geschmolzenen Schlacke in eine Lage aus Blei und in eine Lage aus Stein;

c) Entfernen der Bleilage von der Steinlage;

d) Erhitzen der Steinlage nach der Entfernung der Bleilage auf eine Temperatur von über 1000°C und daraus Entfernung wenigstens des Hauptanteils des Bleisulfids als Dampf zur Erzeugung eines Kupfersteins mit geringem Bleigehalt und

e) Rückgewinnung des Bleis als Dampf.

2. Verfahren nach Anspruch 1, dadurch gekennzeichnet, daß der Schmelzvorgang bei einer Temperatur zwischen 1000°C und 1200°C durchgeführt wird.

3. Verfahren nach Anspruch 1 oder Anspruch 2, dadurch gekennzeichnet, daß der Verfahrensschritt des Schmelzens mit Hilfe einer tauchbaren Brennerlanze durchgeführt wird.

4. Verfahren nach Anspruch 1 oder Anspruch 2, dadurch gekennzeichnet, daß der Verfahrensschritt des Entfernens der Bleilage vom Stein während des flüssigen Zustandes der Bleilage durchgeführt wird.

5. Verfahren nach Anspruch 1, dadurch gekennzeichnet, daß der Verfahrensschritt des Erhitzens der Steinlage nach der Entfernung der Bleilage mit Hilfe einer tauchbaren Brennerlanze durchgeführt wird.

6. Verfahren nach Anspruch 5, dadurch gekennzeichnet, daß der tauchbaren Brennerlanze ein Brennstoffüberschuß zugeführt wird.

7. Verfahren nach Anspruch 6, dadurch gekennzeichnet, daß die Lanze während des Heizvorgangs bei einer Temperatur von über 1000°C durch Schlacke geschützt wird.

4

**0 163 666**

8. Verfahren nach Anspruch 7, dadurch gekennzeichnet, daß die Schlacke eine Kupfer-Reverberierofenschlacke ist, welche zusätzlich Kalk enthält.

9. Verfahren nach Anspruch 8, dadurch gekennzeichnet, daß die Schlacke eine bleioxidreiche Schlacke ist.

## Revendications

1. Méthode pyrométallurgique pour retirer les constituants en plomb des constituants en cuivre d'une scorie comprenant les étapes suivantes:

a) faire fondre le scorie à une température excédant 900°C;

b) laisser la scorie fondue se séparer en une couche de plomb d'oeuvre et une couche de matte;

c) retirer la couche de plomb d'oeuvre de la couche de matte;

d) chauffer la couche de matte après retrait de la couche de plomb d'oeuvre à une température excédant 1000°C et en retirer au moins une portion majeure du sulfure de plomb sous forme de fumée, afin de produire une matte de cuivre pouvre en plomb; et

e) récupérer le plomb sous forme de fumée.

2. Méthode selon la revendication 1, caractérisée en ce que l'étape de fusion est conduite à une température entre 1000 et 1200°C.

3. Méthode selon la revendication 1 ou la revendication 2, caractérisée en ce que l'étape de fusion est conduite au moyen d'une lance de combustion immergée.

4. Méthode selon la revendication 1 ou la revendication 2, caractérisée en ce que l'étape de retrait de la couche de plomb d'oeuvre de la matte est menée alors que la couche de plomb d'oeuvre est liquide.

5. Méthode selon la revendication 1, caractérisée en ce que l'étape de chauffage de la couche de matte après retrait de plomb d'oeuvre est menée au moyen d'une lance de combustion immergée.

6. Méthode selon la revendication 5, caractérisée en ce que la lance de combustion immergée est alimentée avec un excés de combustible par rapport à l'air.

7. Méthode selon la revendication 6, caractérisée en ce que la lance est protégée par un laitier durant l'étape de chauffage à une température excédant 1000°C.

8. Méthode selon la revendication 7, caractérisée en ce que le laitier est un laitier de cuivre du four à réverbère comprenant un complément de chaux.

9. Méthode selon la revendication 8, caractérisée en ce que le laitier est un laitier d'oxyde de plomb.

5